# EUROPEAN PATENT SPECIFICATION

(11) **EP 2 331 408 B1**
(45) Date of publication and mention of the grant of the patent: **12.06.2013**
(21) Application number: 09807760.5
(22) Date of filing: 21.08.2009
(51) Int. Cl.: B65B 3/26, B65B 37/16, B65B 37/18, B65B 1/32, B65B 3/28, B67D 7/00, B65B 1/46

(54) **A MOBILE MATERIAL TRANSFER SYSTEM FOR DELIVERY AND RECEIVING OF SOLID AND LIQUID MATERIAL OR COMBINATIONS THEREOF**
MOBILES MATERIALÜBERTRAGUNGSSYSTEM ZUR ABGABE UND AUFNAHME VON FESTEM UND FLÜSSIGEM MATERIAL ODER KOMBINATIONEN DARAUS
SYSTÈME MOBILE DE TRANSFERT DE MATÉRIAU POUR DISTRIBUER ET RECEVOIR DES MATÉRIAUX LIQUIDES ET SOLIDES OU DES COMBINAISONS DE CEUX-CI

(30) Priority: 22.08.2008 AU 2008904337
(43) Date of publication of application: 15.06.2011
(73) Proprietor: Mitropoulos, Nickolaos, Thomastown, VIC 3074 (AU)
(72) Inventor: Mitropoulos, Nickolaos, Thomastown, VIC 3074 (AU)
(74) Representative: Laudens
(86) International application number: PCT/AU2009/001074
(87) International publication number: WO 2010/020009

(56) References cited:
- EP-B1- 1 180 492
- WO-A1-2007/114835
- WO-A1-2010/018321
- DE-U1-202007 000 039
- RU-C2- 2 240 963
- US-A- 4 171 067
- US-A- 5 787 687
- US-A- 5 964 258
- US-A1- 2004 060 611

## Description

### Field of the Invention

The present invention relates to a portable system for use in transferring and receiving solid and/or liquid material such as cooking oil and fats and the like. In particular the present invention relates to a mobile material transfer system for supplying solid and/or liquid material to and removing waste material such as cooking oil(s) from a commercial or domestic site.

### Background of Invention

It is known in the restaurant field that very substantial quantities of fresh cooking oil need to be on hand to fry various food products such as potatoes, fish and other products. In commercial restaurants it is not unusual for a single frying vat, in which frying of food products takes place, to accommodate commercial quantities of over ten litres of cooking oil. Spent cooking oil is removed regularly and the vat or vats replenished with a fresh supply of oil.

In commercial restaurants and shops including take away fish and chip shops it is typical to maintain a continuous fresh supply of cooking oil. In commercial restaurants a supply of fresh oil is usually maintained in a holding tank on the shop premises, which can be accessible for connection to a frying vat to allow either pumping of oil or flow of oil under gravity to replenish the vat. This system usually requires purchase of a bulk oil holding tank and a tank housing from a supplier, which has the drawback of occupying a substantial amount of space otherwise occupying internal usable restaurant space, and committing the owner to future bulk oil purchasing. Even further, additional storage tanks are required to receive and hold waste oil hence salvaging of waste adds to the expense and space constriction.

Holding tanks of the type used in commercial restaurants are commonly supplied with bulk oil by a truck transport carrying a storage tank containing bulk volume of oil.

Once on the premises, a truck operator may connect a hose on the storage tank to the holding tank to pump new oil into the holding tank. While this method of supplying oil has been historically satisfactory in the sense of being able to supply a quantity of fresh oil, it is a recognised problem that often the metered amount of oil dispensed is less than the amount actually dispensed. Factors affecting volume measurement include:
- faulty calibration of flow measuring devices;
- fluctuations in temperature, wind forces, rainfall, and liquid density;
- random errors, due to human faults;
- movement of oil

As a result a restaurant owner is frequently paying for a particular quota of oil and receiving a lesser amount. There is thus a need to provide a supply means, which minimises the effect of the above factors.

Further, it is not uncommon for restaurants and fast food outlets to employ solid fat materials as a cooking/frying medium or indeed a composition comprising a mixture of solid fats and liquid oils. The conventional supply means does not allow for transfer of liquefied solids including fats or combinations.

In smaller to medium sized restaurants or take-away businesses it is not uncommon for personal to manually add new cooking oil from containers into the frying vat. This means of replenishing a frying vat with cooking oil exposes personal to substantial inconvenience not to mention risks of spillage and injury.

It is therefore an object of the present invention to address one or more of the disadvantages of the prior art delivery systems or at least to provide a delivery system, which can provide the public with a useful alternative.

A moveable transfer unit for transferring cooking oil and fats is known from DE 20 2007 00039 U1 according to the preamble of claim 1.

### Summary of the Invention

In accordance with the invention there is provided a moveable transfer unit for transfer of cooking oil and fats between a supply station and a storage tank or cooking vat including:
a wheeled support frame which includes a top and bottom frame ends and wherein the bottom end includes a wheeled base;
a mobile container adapted for receiving a quantity of cooking oil and fats or mixture thereof from the supply station, the mobile container having at least one receptacle mounted to said wheeled support frame;
a pump means for transferring the cooking oil and fats from the at least one receptacle to a vat or other storage means, characterised in that the transfer unit further includes;
a first weigh cartridge location between the base and the at least one receptacle;
a controller operatively connected to the supply station;
a weight indicator;
a weigh cartridge including a weigh pan, the weigh pan being operably connectable to the controller, wherein in an operating condition the weigh cartridge is removably received within the first weigh cartridge location between the base and the receptacle in a first weigh condition, whereby the weigh pan is connected to the weigh indicator which is calibrated to determine the amount of cooking oil and fats or mixtures supplied to the at least one receptacle by the supply station and/or amount of cooking oil and fats dispensed from the receptacle to a vat; and
wherein upon receiving or transferring of the cooking oil and fats, the change in weight of the mobile container is measured by the weigh pan and the actual amount of cooking oil and fats transferred is determined by the weigh indicator on a weight differential calibration.

The portable transport unit provides a substantial advance over the prior art systems of supplying fresh cooking oil to restaurants, take-away foods businesses and the like fast food shops. For example, the present invention does not require a restaurant owner to purchase a storage tank for holding large quantities of oil. Hence there is an immediate cost saving as well as ongoing savings by not having committed to bulk purchases of fresh oil. The present invention enables a supply directly to a kitchen apparatus such as a frying vat. Even if a restaurant owner has already purchased a storage tank, the present invention can be used to transfer any desired volume into an existing tank.

Without the need for a storage tank there is also a space saving, that is, more available space for commercial improvements. There is also a time saving in that transfer of fresh oil can be made directly to a frying vat without the need to first fill a storage tank from a supply tanker and then pump from the storage tank to a frying vat. The system according to the invention further provides an improved quantitative measure of material transfer since it is not as affected as are conventional methods by exposure environmental factors such as temperature, humidity and density.

The at least one mobile container can include a heating element within the internal compartment, which can be used to maintain a supply of a cooking fat, otherwise solid at ambient temperature, in a liquefied state. This represents an advance over prior art systems because until now solid cooking fats could only be supplied in bulk prepacked drums, which occupy space but also require removal therefrom into a cooking vat plus subsequent application of heat.

The at least one mounting portion of the unit can be located beneath the internal compartment of the container so that when the weigh cartridge is mounted, the container is seated on or adjacent to the weigh pan.

In a further embodiment, the at least one mounting portion of the unit can be located above the internal compartment for removably mounting the weigh cartridge in a second mounting condition adjacent to or seated on the mobile container.

In this second mounting condition, the unit can receive an existing storage container or packaging vessel on top of the first container and allow positive engagement between the weigh pan and the storage container or packaging vessel and in turn allow transfer of material between the mobile container and packaging vessel or storage container, and measurement of material weight transfer to or from the storage container or packaging. In a further embodiment, the unit can include a first and second mounting portion located beneath and above the internal compartment respectively so that the weigh cartridge can be relocated from one mounting portion to the other.

The pump means can include a removable tap interconnected thereto so that cooking material drawn from the internal compartment under vacuum can be directed by the tap to another vessel or directly into a kitchen apparatus such as a fryer.

The mobile unit can include a vacuum pump mounted by the mobile container, and a material transfer pipe extendable between a frying vat and the internal compartment for transfer of waste from the frying vat, whereby in operation the vacuum pump creates a vacuum in the air space of the internal compartment of the mobile container wherein the vacuum allows transfer of contents from the vat to the container as waste via the transfer pipe. In this embodiment, the weigh cartridge is located on the unit in a mounting portion located beneath the internal compartment so that the change in weight of the waste material and mobile container is determined by the weigh pan.

In one embodiment the transportable unit can include a mobile container for receiving waste material from a waste vessel or frying vat, and a pre-packaged container stacked on the mobile container, wherein the pre-packaged container can contain a fresh supply of a material or mixture of materials from the supply station such that when waste material is returned under vacuum from a vat or fryer to the first container, the second container can subsequently supply a fresh amount of material or mixture of materials directly to the vat/fryer to replenish the cooking medium. In both cases, the weigh cartridge can be relocated so as to measure the amount of waste material returned to the first container and measure the amount of material transferred from the second container to the vat/fryer or storage tank.

The mobile container can further include an inlet port adapted to fit a filter element and a washing element. The filter element can include an oil filter through which cooking material oils and/or fats pass. The washing element can include a hollow body on the end of which there is mounted a spray head wherein when fitted to the inlet port the body and spray head reside within the internal compartment of the mobile container wherein the body and spray head are in fluid communication and the body is connectable to an external fluid source.

The controller can be programmed to operate the supply station such that the supply station can supply a preselected material or mixture of materials including cooking oils and/or fats.

The weigh cartridge can further include a lifting means such as air-operated cylinders to assist lifting the unit or the at least one mobile container. The weigh cartridge can include an air operated hydraulic ram or rams which operably urge positive engagement between the weigh pan and the container so that the container and/or whole unit can be weighed and weigh measurements of material transferred from or received by the container determined. An advantage of the air ram(s) is that the container can be lifted from the weigh pan while the unit is mobile - and the weigh pan can positively engage the container in a stationary position.

The mobile container can include a further compartment adjacent the internal compartment for housing a vacuum pump and/or compressed air cylinder.

The mobile container can include a wheeled support frame. The support frame can include a top and bottom frame ends wherein the bottom end includes a wheeled base and recess for removably receiving the weigh cartridge. The support frame can also include a recess in the top frame end to removably receive the weigh cartridge in a second weigh condition such that a second container can be located above the first container in a stackable array and seated on the weigh cartridge.

The top and bottom recesses in the wheeled support frame enable stacking of containers substantially on top of each other. The weigh cartridge can be removably located in a first of the recesses to receive a first container in a weighing condition such that the weight of the first and subsequent containers can be continuously monitored.

In a related aspect of the invention there is described a method of transferring a supply of a selected cooking oil or blends of cooking oils and/or cooking fats, the process including:
providing a material transfer unit moveable between a supply station and a material storage tank or cooking vat and the like, the unit including:
   a mobile container, the container having an internal compartment for receiving a quantity of material or mixture of materials from the supply station,
   a controller operatively connected to the supply station for ,
   a pump means supported by the container for transferring material from the internal compartment to a vat or other storage or packaging means,
   a weigh cartridge including a weigh pan, the weigh pan being operably connectable to the controller, whereby the weigh pan is connected to a weigh indicator which is calibrated to determine the amount of material transferred from or received by the container;
   a mounting portion located beneath the internal compartment of the container for removably engaging the weigh cartridge in a first mounting position below the container;
   a lifting means mounted by the weigh cartridge the lifting means being operable to urge positive engagement of the weigh pan with the container thereabove so that the container and/or whole unit can be lifted and weighed;
      including the steps of transporting the mobile container to a kitchen apparatus such as a frying vessel or storage vessel, actuating the lifting means so that the weigh pan is positively urged against the mobile container, actuating the pump means to transfer a supply of material from the mobile container to the storage vessel or fryer or the like, wherein upon transferring the material, the change in weight of the container is measured by the weigh pan and the actual amount of material transferred is determined by the weigh indicator on a weight differential calibration.

The mobile unit of the present invention allows easy transfer of a fresh supply of material or mixture of materials to an existing storage tank or directly to a kitchen apparatus such as a fryer.

In a further related embodiment of the invention there is described a process for packaging a supply of oil, the process including:
providing a material transfer unit moveable between a supply station and a material storage tank or cooking vat and the like, the unit including:
   a container adapted to be transportable, the container having an internal compartment for receiving a quantity of material or mixture of materials from the supply station,
   a controller operatively connected to the supply station for controlling a supply of a material or mixture of materials from the supply station to the container,
   a pump means supported by the internal compartment of the container for transferring material from the internal compartment to a packaging container,
   a weigh cartridge including a weigh pan, the weigh pan being operably connectable to the controller, whereby the weigh pan is connected to a weigh indicator which is calibrated to determine the amount of material transferred from or received by the container;
   a lifting means mounted by the weigh cartridge, the lifting means being operable to urge positive engagement between the weigh pan and the packaging container so that the packaging container can be lifted and weighed;
   a mounting portion located above the internal compartment of the mobile container for removably engaging the weigh cartridge in a first mounting position above the mobile container;
   wherein a packaging container is placed on the weigh cartridge and the weigh pan is positively urged against the mobile container, and wherein the pump means transfers a supply of material from the mobile container to the packaging container, and the change in weight of the packaging container is measured by the weigh pan and the actual amount of material transferred is determined by the weigh indicator on a weight differential calibration.

An advantage of the present invention is that it can be used to pre-pack a desired cooking material or mixture at the supply station, and thereafter the transportable unit can deliver the pre-packaged material to a restaurant or kitchen. Alternatively, the mobile unit can be transported to an existing storage vessel wherein the mobile container can be positioned below the storage vessel and the weigh pan subsequently urged by the lifting means into positive engagement with the storage vessel.

A further advantage is that packaging can be conducted remotely and in a controlled environment so as to minimise exposure to external factors such as humidity, temperature and the like.

In this embodiment, the unit can further include a packaging container receptacle mounted on the weigh pan for receiving the packaging container or a storage vessel. The packaging or container receptacle can include a series of annular internal shoulders spaced in stepped apart relation for receiving containers or packaging vessels of varying sizes.

Alternatively the container receiving structure can comprise a series of discrete stackable bodies for receiving containers of varying sizes wherein said stackable bodies include a seat for receiving a base portion of a corresponding sized container and a shoulder for receiving the seat of a second mounting body in a demountable stackable array.

Preferably the stackable bodies forming the container receptacle structure include cooperating mounting means so that a plurality of bodies can be readily stacked or separated from one another.

In one embodiment of the present invention the combination portable material transfer unit and packing case can be used in a packaging process. Alternatively the packing base can be added to the portable unit in a waste receiving operation whereby waste oil can be pumped into a container onsite and the volume of waste oil transferred calculated by the second weigh pan.

In a further related aspect of the invention there is provided a material transfer system which is portable for receiving or transferring a measurable quantity of a solid and liquid material or combinations thereof such as cooking oil and fats, the system including:
a mobile supply station having one or more vessels for supply or receiving an amount of a material or mixture of material, the one or more vessels being interconnected to a pumping means to transfer a material or mixtures of materials, the pumping means being operable by a controller to provide a measured amount of material or mixture of materials from the one or more vessels; and
a transportable material transfer unit moveable between the supply station and a material storage tank or cooking vat including:
   at least one mobile container, the container having an internal compartment for receiving a quantity of material or mixture of materials from the supply station,
   a controller operatively connected to the supply station,
   a pump means supported by the container for transferring material from the internal compartment to a vat or other storage or packaging means,
   a weigh cartridge including a weigh pan, the weigh pan being operably connectable to the controller,
   at least one mounting portion adjacent to or on the mobile container for removably receiving the weigh cartridge, whereby the weigh pan is connected to a weigh indicator which is calibrated to determine the amount of material transferred from or received by the container,
      wherein upon receiving or transferring of material or combinations of material, the change in weight of the container is measured by the weigh pan and the actual amount of material transferred is determined by the weigh indicator on a weight differential calibration.

In the present system the term 'material' can include conventional cooking oils and fats in liquefied form. An even further advantage of the present system is that mixtures of cooking oils and fats can be readily provided on site. For example, where a restaurant or fast food outlet requires a composition of oils and/or fats, the desired composition can be formulated on site.

The system of the invention can include a blending station intermediate the supply station and the transportable material transfer unit, wherein the one or more vessels is/are separately interconnected to the blending station by a series of pump means, and wherein the controller controls the series of pump means to provide a desired material or combination of materials to the transfer unit. In contrast to conventional systems, the instant system can provide a supply of any cooking medium including oils or fats and combinations thereof directly to a mobile transfer unit, cooking vat or existing storage facility.

In this embodiment of the invention, the blending station can be located above the level of the mobile container so that material at the blending station can be fed to the container by gravity feed. In a further embodiment, the blending station can include a series of inlet ports so that each vessel at the supply station can be provided with a dedicated pump line to a separate inlet port. In this embodiment the blending station is a common vessel, and the use of dedicated pump lines substantially avoids any possibility of cross contamination of different materials.

One or more of the vessels at the supply station can include a heating element so that a supply of a cooking fat or fats can be maintained at a temperature so as to provide the fat or fats in a liquefied form.

The weigh cartridge can further include a lifting means such as air-operated cylinders to assist lifting a mobile container.

In related aspect of the present invention there is disclosed a method of transferring cooking oils or fats or combinations thereof to or from a restaurant or take-away food business including the steps of:
providing a material transfer system which is portable for receiving or transferring a measurable quantity of a solid and liquid material or combinations thereof including:
   a material transfer unit moveable between a supply station and a material storage tank or cooking vat, the unit including:
      at least one mobile container having an internal compartment for receiving a quantity of material or mixture of materials from the supply station,
      a controller operatively connected to the supply station,
      a pump means supported by the container for transferring material from the internal compartment to a vat or other storage means,
      a first mounting portion located beneath the internal compartment;
      a weigh cartridge including a weigh pan, the weigh cartridge being operably connectable to the controller and removably mounted by the first mounting portion such that in an operating condition the container is seated on the cartridge, wherein the weigh pan is connected to a weigh indicator which is calibrated to determine the amount of material transferred from the container,
      wherein upon receiving or transferring of material, the change in weight of the container is measured by the weigh pan and the actual amount of material transferred is determined by the weigh indicator on a weight differential calibration; and
      actuating the pump means to transfer a volume of material from the container to a frying vat or storage tank and calculating the volume by (a) transferring weight data from the weigh pan to the weigh indicator and (b) programming the weigh indicator to calculate volume based on weight differential and material density.

The weigh indicator can include control software which is designed to manipulate data input to provide output information relating to volume of oil transferred, quality and type of oil transferred, cost of oil and other business related information. The information can be formatted to meet general auditing and business standard practice. The weight data and weight calculations can be transmitted to a remote site for review. Hence the control software can be used for providing information and invoices. The controller can be an electronic wireless controller which received data from the weigh pan or weigh cell. The controller can include a wireless data transfer facility, and can be connected to a personal computer with an inbuilt scanner with a signal to operate.

The material transfer system can include a pre-mixing station wherein the pre-mixing station is provided with (i) storage means for separately storing two or more different oils for cooking, and (ii) an oil distribution means interconnected to the storage means, wherein the distribution means meters out a predetermined volume of an oil or selection of two or more oils.

The Invention will now be explained in detail with respect to accompanying illustrations. Following is a brief description of the drawings.

### Brief Description of the Drawings

Figure 1: shows a perspective view of a portable transfer unit in accordance with one embodiment of the present invention;
Figure 2: shows an alternative perspective view of the portable unit in accordance with figure 1;
Figure 3: shows a perspective view of the portable unit in accordance with a further embodiment of the present invention;
Figure 4A: shows a perspective view of the portable unit with a packing base in accordance with an embodiment of the present invention;
Figure 4B: shows a cross sectional schematic representation of the embodiment shown in figure 4A;
Figure 5: shows a schematic representation of the portable unit according to figures 4A and 4B in a packaging process;
Figures 6A and 6B: show cross-sectional schematic representations of yet a further embodiment of the portable unit according to the present invention;
Figure 7: shows a schematic representation in a perspective view of a material transfer unit in accordance with the present invention;
Figure 8a and 8b: show a schematic representation in perspective view of a further embodiment of the material transfer unit in accordance with figure 7;
Figure 9: shows a schematic representation in perspective view of a further embodiment of the material transfer unit according to figure 7 when used for transferring material to an existing storage facility;
Figures 10a and 10b: show schematic representations in perspective view of a further embodiment of the material transfer unit in accordance with the present invention used for collecting waste material and replenishing supply from a pre-packaged container;
Figures 11a, 11b and 11c: show cross-sectional schematic representation of various components for use in the material transfer unit according to figure 7;
Figures 12a and 12b: show an elevation view and perspective view of a weigh cartridge used in the present invention;
Figures 13: shows side elevation of a further embodiment of the transportable unit in accordance with the present invention.

### Detailed Description of the preferred embodiments with respect to the accompanying drawings

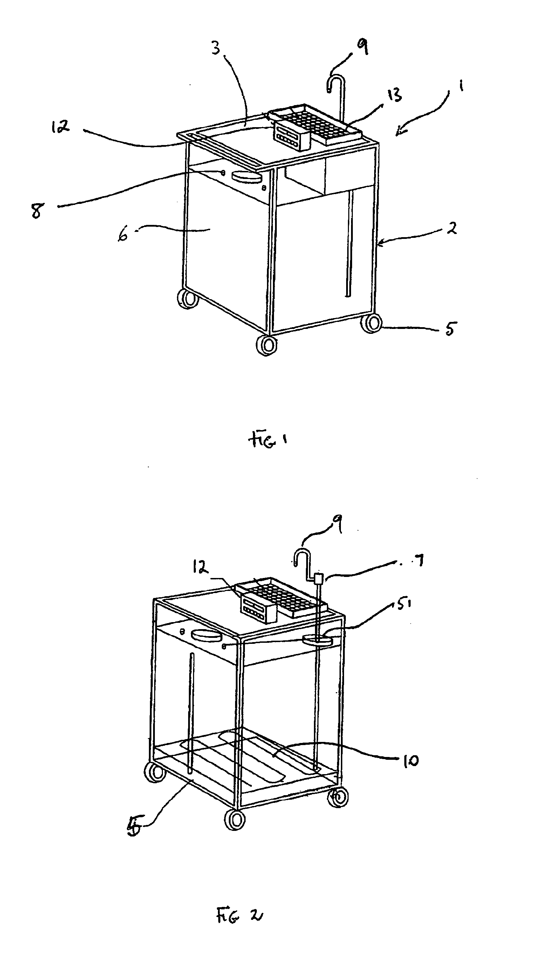

Referring to figures 1 to 3 there is shown a material transfer unit 1, which is portable, for transferring a quantity of a material such as cooking oil or a solid cooking fat in liquefied form or combinations thereof to a restaurant or take-away food business or the like (not shown).

The transfer unit comprises a mobile container 6, which is mobile, made from stainless steel or plastic. In this embodiment the container has a volume capacity of about 80 litres and is shown having a wheeled base 5 so that the unit can be readily moved between a supply station (not shown) and a frying vat or storage tank. The unit also includes a frame structure 2 being supported by the wheeled base, the unit having a planar top 3 mounted on a top portion of the frame.

The unit 1 further includes a controller 12 operatively connected to a pump means 7 and a supply station (not shown). The pump means is supported by the container 6 in a sealed condition by a clamping device 51, and is adapted for transferring material from the container to a vat or other storage means.

The container 6 may also include a breathing opening 8 to allow a return to equilibrium pressure between environment and container once a quota of material has been transferred. The pump means ends in a tap structure 9 for directing dispensing of container contents.

The container may include a liquid level indicator 14 as a visual guide to assist estimate of material contents in the container. As shown in figure 1, the unit 1 further includes a heating element 10 which is housed within the container and connectable to an external power source. The heating element allows delivery and transfer of material such as cooking fats which are generally solid at ambient temperatures.

As best seen in figure 2, the unit 1 further includes a weigh cartridge 11 removably mounted to the wheeled frame 5 immediately below the container 6 in a first mounting condition. In this embodiment, the container is seated directly on the weigh cartridge.

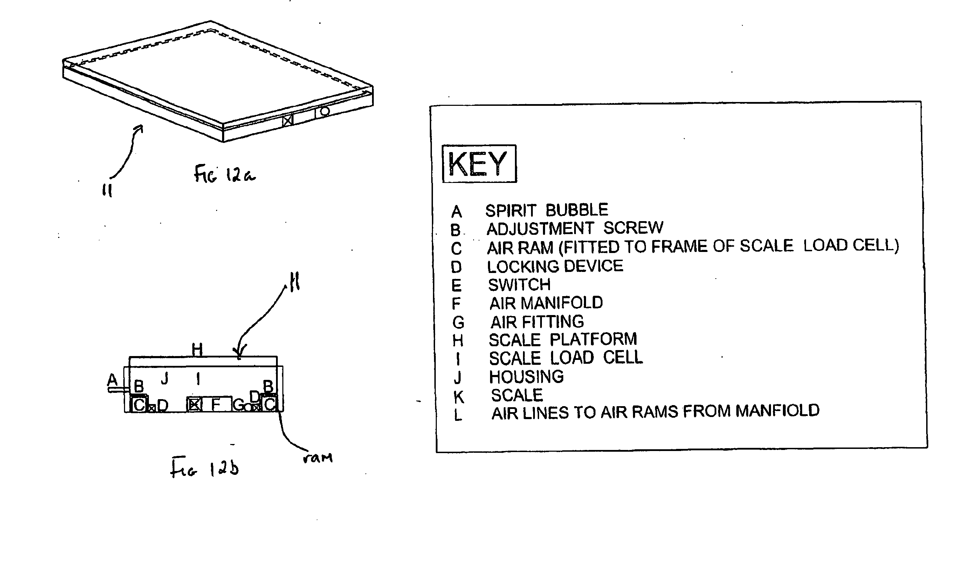

The weigh cartridge includes a weigh pan (best seen in figure 12) and is operably connected to the controller 12. The weigh pan in turn is connected to a weigh indicator, which is calibrated to determine the amount of material transferred from the container. The weigh indicator includes control software, which is designed to manipulate data input to provide output information relating to volume of oil transferred, quality and type of oil transferred, cost of oil and other business related information.

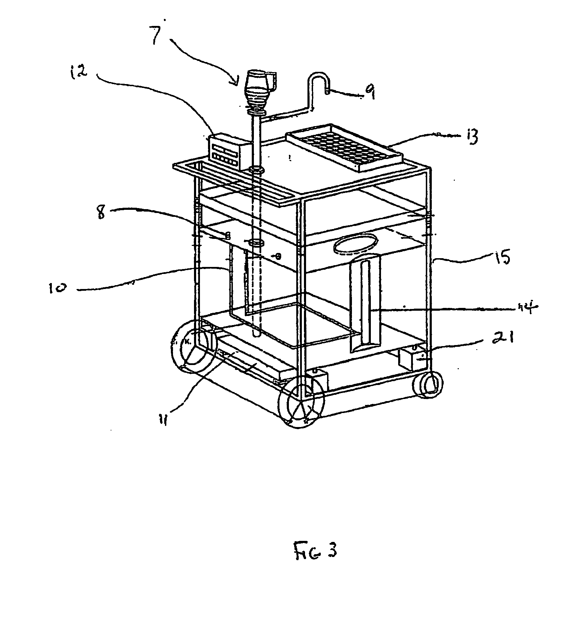

As best shown in figure 3 the weigh pan 11, having an integrated load cell, is mounted in a first weighing position, to the wheeled base 5. The top part 3 of the frame provides a support surface for receiving the controller 12 being a wireless digital display device and a drip tray 13. The wireless digital display device is calibrated to receive input data from the weigh pan and determines the volume of material transfer based on weight differential and material density calculations. In this way the error tolerances for determining volume of material transferred is substantially reduced hence concomitantly greater accuracy is achieved.

The weigh cartridge 11 of the mobile unit includes air-operated hydraulic rams 21, which operate on compressed air, to assist lifting of the mobile unit or the weigh pan into engagement with the container 6 to allow weight measurement.

As seen in figure 3 the top portion of the frame can be adapted to be slidably received on the frame hence the top portion can be removed to allow easy access to the container for removal and replacement with a fresh or empty container for transfer of fresh oil and receiving of old oil respectively. Additionally the hydraulic rams 21 located on the bottom end of the frame adjacent the wheeled base can be used to raise or lower a full or partially full container relative to the frame.

In operation (refer figure 3 for example), the mobile container with material contents is initially weighed by the weigh pan, and the final weight measured following transfer of material. The weight data at both the start of transfer and end is sent to the digital display device 12. The volume of material transferred or indeed received is calculated and cost to a restaurant or take-away food operator is determined.

In a further embodiment, the invention provides a material transfer system, which is mobile for receiving and/or transferring a measurable quantity of a solid and liquid material or combinations thereof such as cooking oil and fats. The mobile system includes the material transfer unit 1 and a mobile supply station (not shown). The supply station is provided with (i) a mobile storage facility for separately storing one or more different cooking oils or liquefied fats, and (ii) a blending facility such that one or more of the oils and/or fats or mixtures thereof can be selected and metered out into one or more mobile transfer units.

The supply station may therefore have one or more vessels for supply or receiving an amount of a material or mixture of material, the one or more of the vessels being interconnected to a pumping means (not shown). The pumping means is operable by the controller to provide an amount of material or mixture of materials from the one or more supply vessels. In one embodiment the mobile supply station includes one or more vessels for receiving transfer of waste oil/fats.

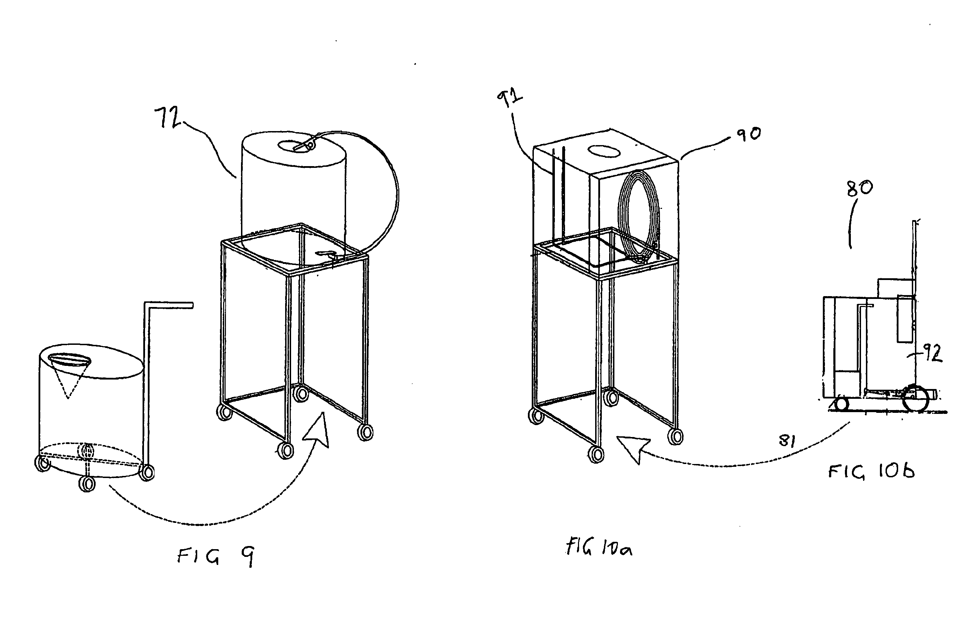

The unit 1 can further include a vacuum pump (see figure 10b), and an oil transfer pipe. In an operating condition, the vacuum pump creates a vacuum in the air space of the container, and the transfer pipe extends between the container and a cooking vat or waste storage vessel (not shown), wherein the vacuum created in the container urges transfer of waste oil from the vat/fryer to the waste container via the pipe.

Once waste oil material has been returned to the container, a further container can supply a fresh amount of material or mixture of materials directly to the vat/fryer to replenish the cooking medium. In this embodiment it can be seen that the weigh cartridge 11 has been securely relocated to the second mounting position on unit container 6. In this position the further container can be located securely on top of the unit container and seated directly on the weigh cartridge so that (i) the amount of waste material returned to the unit container can be determined, and (ii) the amount of material transferred from the further container to the vat/fryer or storage tank is also determined.

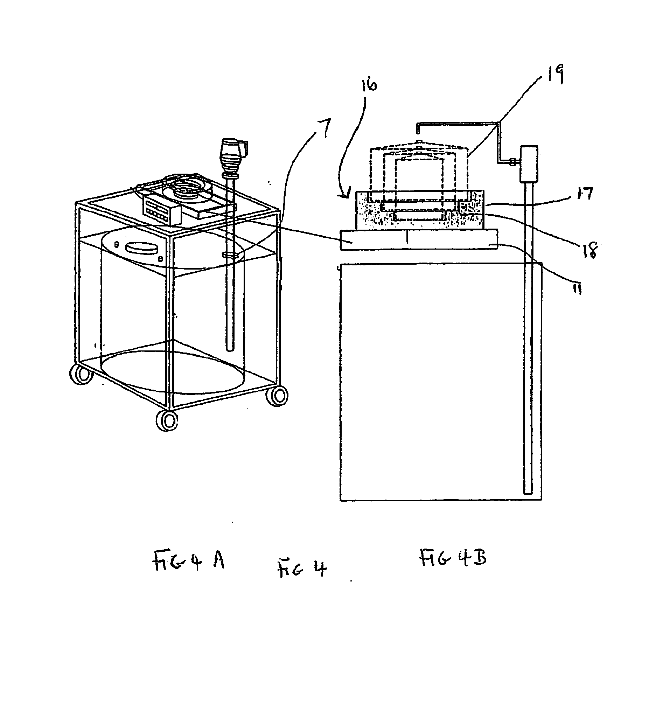

Referring to figure 4A and 4B there is shown a further embodiment of the invention in which the portable transfer unit includes a packing base 16 mounted to the top support of the frame. The packing base includes a container receiving structure 17 having a series of internal shoulders 18 in stepped apart relation for receiving containers 19 of varying sizes. In this embodiment the container receiving structure comprises a generally circular geometry with three annular shoulders which are spaced in stepped apart relation as shown in cross section to receive containers of three different sizes.

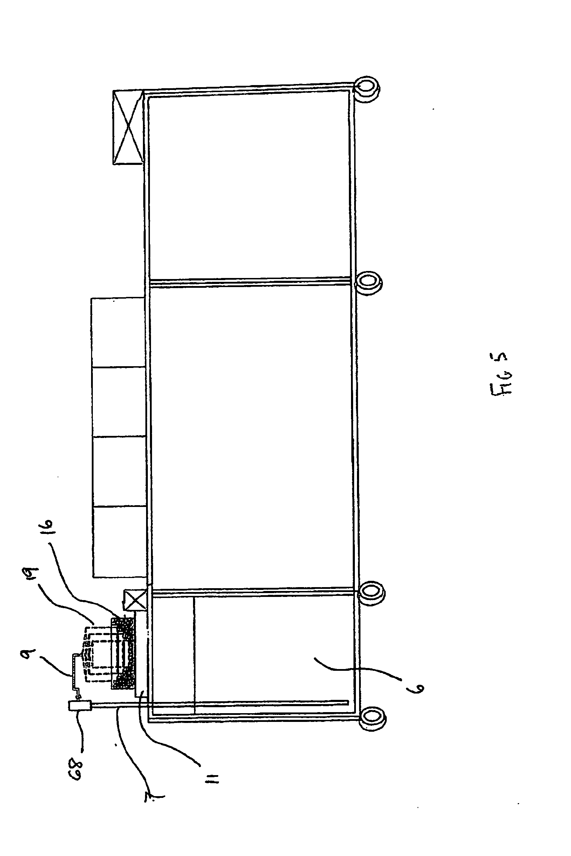

The packing base further includes the weigh cartridge 11 on which the container receiving structure is mounted. The packing base can be used in a packaging process line as can be seen from figure 5 where containers of varying sizes can be filled with fresh oil at a decentralized site, packed and stored ready for use. Alternatively the packing base can be added to the portable unit in a waste receiving operation to receive waste oil onsite and calculating the volume of waste oil transferred.

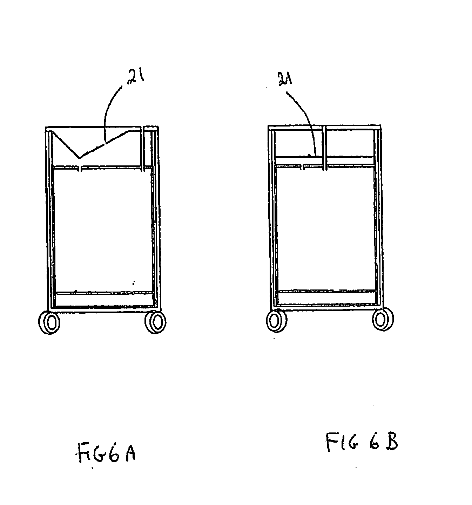

Referring to figures 6A and 6B there is shown a portable material transfer unit for salvaging old oil. In this case the portable unit includes a sieve structure 21 disposed between the container and a pump outlet (not shown). The sieve receives liquid waste oil from a pump means and provides a filtering pathway such that liquid waste oil entering the sieve is directed over a membrane or other structure to substantially remove solid particulate matter before entering the container. Removal of solid particulate matter is an advantage when salvaging oil since a restaurant or take-away food operator may receive a salvage payment based on amount of non-contaminated oil which has been collected.

In yet a further embodiment of the present invention there is disclosed a method of transferring fresh cooking oil to a restaurant or take-away food business. The method requires providing a portable cooking oil transfer unit as hereinbefore described. The portable unit comprises a wheeled frame able to be transported to a site with a frying vat or storage tank. A container of the type shown in figures 1 to 3, which has been filled at a remote packing site, may be inserted within the wheeled frame and seated upon a weigh pan located at a base portion of the bottom end of the frame. The container is connected to a pump device supported by a top frame end portion. The top frame portion carries a weigh indicator adapted to wirelessly receive weight input data from the weigh pan. An initial weight measurement is recorded by the weigh pan and transmitted to the weigh indicator. The pump is actuated so that material within the container is transferred directly into a frying vat or other storage means. A final weight of the container is measured and transmitted to the weigh indicator. The weigh indicator is programmed to calculate the volume of material transfer based on weight measurements received and other physical parameters such as density. When the oil has been transferred, the container is removed from the wheeled frame and a second filled container inserted. The process of transferring oil can be repeated by continually replacing exhausted containers with a fresh container.

When the present portable unit is used for transfer of waste cooking oil for example, the unit includes a packing base member 16 mounted to a top frame end of the wheeled frame. The packing base includes a container receiving structure and a second weigh pan beneath the container receiving structure. An empty container is placed within the container receiving structure and the wheeled frame positioned at the site to receive waste oil directly from a frying vat or other waste storage means. Waste oil is transferred by gravity or pump means into the container. The container is weighed by the second weigh pan initially in an empty state and the weight recorded and transmitted to the weigh indicator. When the container is full or has received its complement of waste oil, the final weight of the container is measured and transmitted to the weigh indicator. If further waste oil is needed to be transferred, the initial container can be easily removed on site and a fresh empty container inserted once again into the container receiving structure.

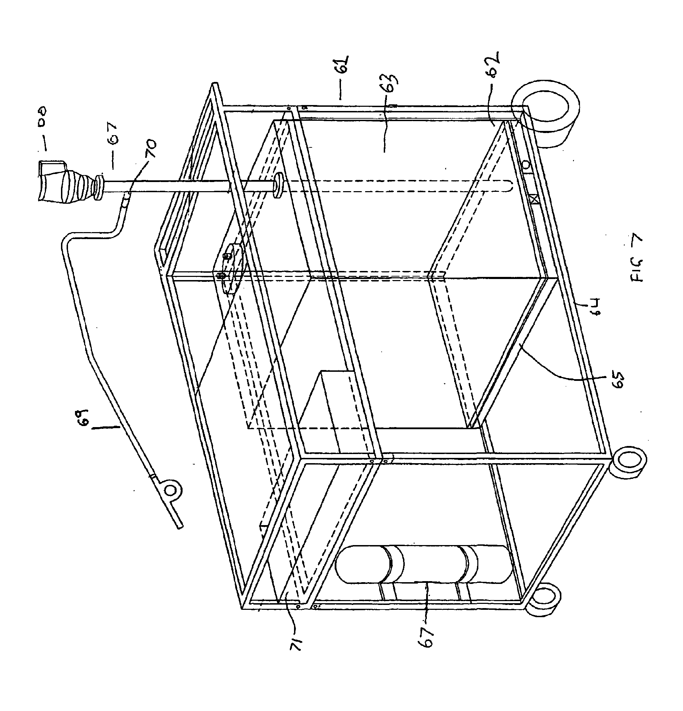

Referring to figure 7 there is shown a portable material transfer unit 60 in accordance with a further embodiment of the present invention. The unit 60 includes a mobile container 61 which comprises a tank 63 mounted on a wheeled base frame 64. The unit further comprises a weigh cartridge 65 which includes a weigh pan (not shown). Figure 7 shows the weigh cartridge engaged in a mounting portion 62 located beneath the tank. The weigh pan is connected to a weigh indicator which is calibrated to determine the amount of material transferred from the tank.

In figure 7 the weigh cartridge is securely seated on a section of the wheeled base frame by locking means (not shown). The weigh cartridge includes air operated hydraulic rams 66 (best seen in figures 12a and 12b) which are connected to the weigh pan so that in an operating condition the hydraulic rams can lift the weigh pan relative to the weigh cartridge to both engage the container and lift the tank to perform weighing measurements.

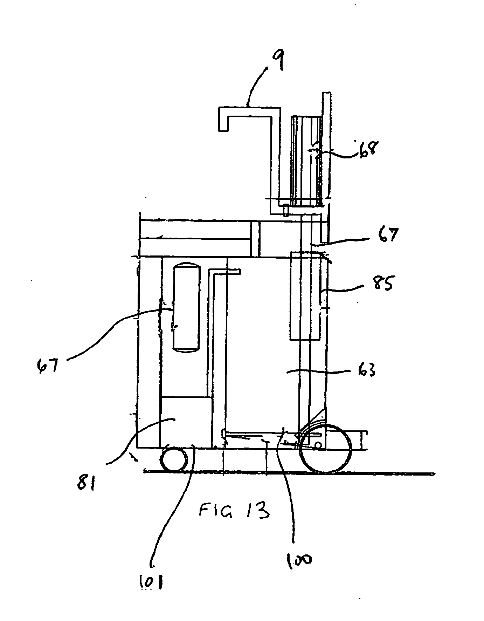

The mobile unit in figure 7 is also shown having a compressed air cylinder 67 mounted on the wheeled frame, which provides a source of compressed air to operate the hydraulic rams. In figures 13a and 13b it can be seen that the frame is divided into two compartments 100 and 101. A first compartment 100 receives the container, and the second compartment receives accessory components including air cylinder containing a source of compressed air for the rams, and vacuum pump.

The tank 63 provides an opening for sealed insertion of a pump 67 by clamping apparatus 40, the pump 67 having a removable motor 68. The pump is shown having a tap 69 extending from a removable tap connection 70, which acts as a conduit for transferring material under vacuum from the container to a kitchen apparatus such as a fryer (not shown) or an existing storage vessel/tank (best seen in figure 9).

The unit of figure 7 further includes a controller 71 slidably mounted to the wheeled frame so that when not in operation, the controller can be withdrawn into a cavity within the frame. The controller can be an electronic wireless device which receives data from the weigh pan. The controller can include a wireless data transfer facility, and can be connected to a personal computer with an inbuilt scanner with a signal to operate.

The controller is operatively connected wirelessly to a supply station (not shown) upstream therefrom. The controller can pre-programme the supply station to supply a desired material or blend of materials including fats to the unit.

In one operating condition, the container/tank 63 is supplied with a volume of a select material from the supply station. The unit is then transported to a kitchen apparatus (not shown) or an existing storage vessel (refer figure 9) to transfer the fresh material. In figure 9, the unit 60 is shown wheeled to a location immediately below an elevated storage tank 72. Once in position, the hydraulic rams lift the weigh pan to positively engage the tank 63 so that the total weight of the tank and contents can be weighed. The pump 67 then enables transfer of the material from the tank 63 to the storage vessel 72 or directly to a fryer (not shown), and the actual amount of material transferred is determined by the weigh indicator on a weight differential calibration.

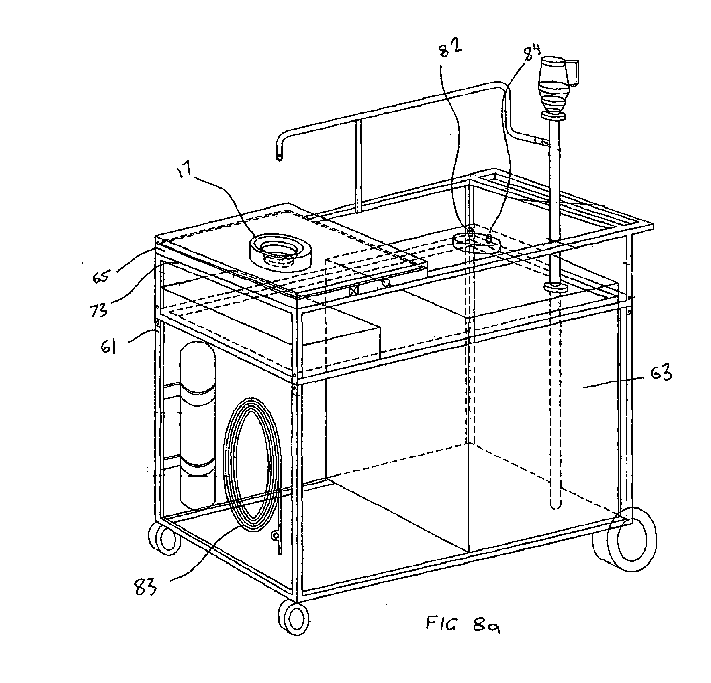

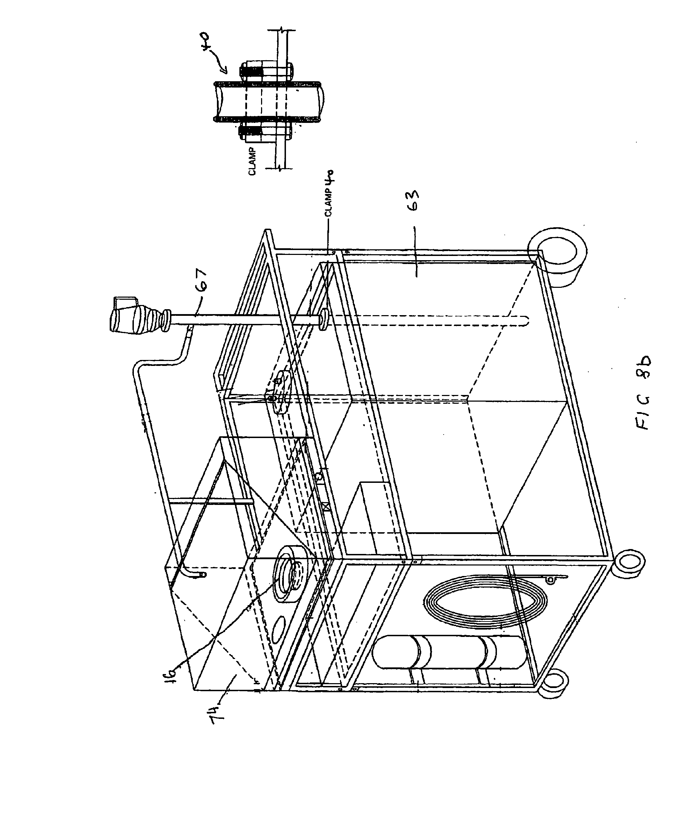

Referring to figures 8a and 8b, there is shown an embodiment of figure 7 illustrating the unit having the weigh cartridge 65 mounted on a second mounting portion 73 of the frame above the container 63. In this position, the mobile unit can receive a packaging container 74, which can be filled with oil from the container 63 by actuating the pump 67. One significant advantage of this is that a packaging container 74 can be pre-filled in a controlled environment.

In this embodiment, the portable transfer unit includes a packing base 16 positioned on the weigh cartridge on a top support portion of the frame 61. The packing base includes a container receiving structure 17 having a series of internal shoulders in stepped apart relation for receiving containers of varying sizes.

Turning to figures 10a to 10c, there is shown a further embodiment showing a transportable material transfer unit 80 for receiving waste material from a kitchen apparatus such as a fryer or a waste storage tank (not shown). In this embodiment the unit 80 includes a vacuum pump 81 in a separate compartment of the frame.

In operation the vacuum pump 81 is connected to an inlet port 82 on the container and creates a vacuum within the air space of the container. A hose 83 is extended between the container 63 and the waste storage vessel or fryer, and the vacuum urges transfer of waste oil to the container. As waste material is transferred to the container, the weigh pan, located at a mounting portion beneath the container, engages the container so that weight measurements can be obtained hence the weight of waste material can be determined.

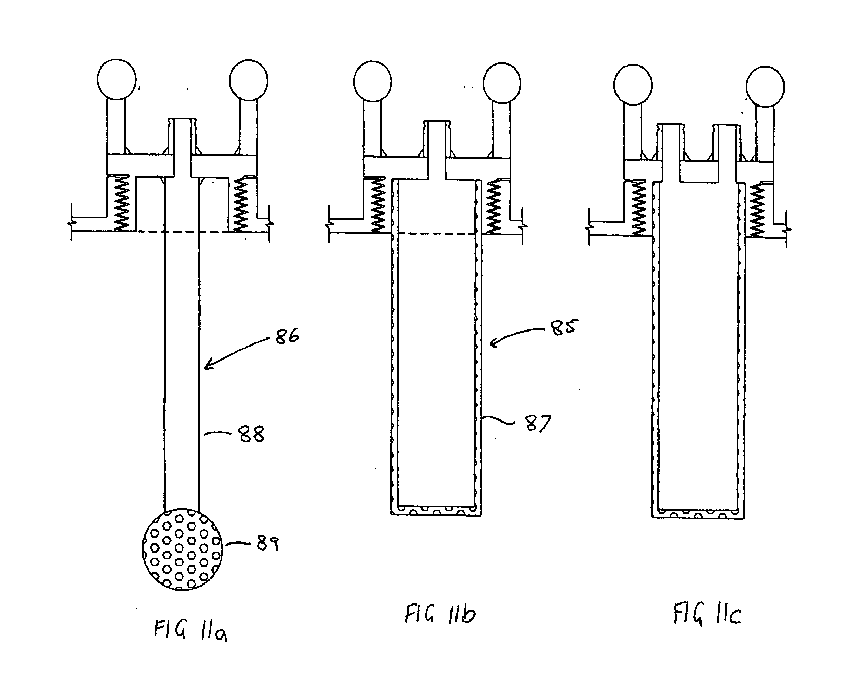

As shown, the mobile container can further include a second inlet port 84 adapted to fit a filter element 85 (refer figure 1 1b) and a washing element 86 (refer figure 11a). The filter element can include an oil filter medium 87 through which cooking material oils and/or fats pass.

The washing element 86 can include a hollow body 88 on the end of which there is mounted a spray head 89 wherein when fitted to the inlet port 84, the body and spray head reside within the internal compartment of the mobile container wherein the body and spray head are in fluid communication and the body is connectable to an external fluid source.

Referring to figure 10a, there is shown a storage vessel 90 for storing a volume of liquefied fats by means of heating element 91. In this embodiment the storage vessel can be used to replenish a kitchen apparatus directly by gravity feed. Figure 10a shows the unit 80 being transported to the storage vessel so that the amount of material used to replenish a fryer can be measured.

The unit 80, with weigh cartridge located beneath the container in a first mounting portion, can be wheeled beneath the storage vessel and the hydraulic rams operated to force engagement between the weigh pan and bottom surface of the container 92. The rams can be further engaged to lift the unit into engagement with the storage vessel 90 hence the total weight of the unit 80 plus the storage vessel 90 can be lifted for weighing. As material is fed from the storage vessel to replenish a fryer, the amount of material remaining in the storage vessel is weighed and the actual amount of material transferred determined on a differential basis.

As understood, an alternative means of weighing the amount of material transferred from the storage vessel can be determined by relocating the weigh cartridge to a second mounting portion above the container on or close to the top surface of the frame. It is also understood that the wheeled frame or mobile container can include a first and second mounting portions so that the weigh cartridge can be relocated from one mounting portion to another depending on the operation.

In this position the rams can be actuated to cause the weigh pan to engage the storage vessel, and an initial weight measurement taken. The final weight of the storage vessel can then be weighed once a sufficient amount of material has been transferred, and the actual amount of material transferred calculated.

In a further embodiment of the invention (not shown), there is provided a material transfer system which is portable for receiving or transferring a measurable quantity of a solid and liquid material or combinations thereof such as cooking oil and fats, the system including:
a mobile supply station having one or more vessels for supply or receiving an amount of a material or mixture of material, the one or more vessels being interconnected to a pumping means to transfer a material or mixtures of materials, the pumping means being operable by a controller to provide a measured amount of material or mixture of materials from the one or more vessels; and
a transportable material transfer unit moveable between the supply station and a material storage tank or cooking vat including:
   at least one mobile container, the container having an internal compartment for receiving a quantity of material or mixture of materials from the supply station,
   a controller operatively connected to the supply station,
   a pump means supported by the container for transferring material from the internal compartment to a vat or other storage or packaging means,
   a weigh cartridge including a weigh pan, the weigh pan being operably connectable to the controller,
   at least one mounting portion adjacent to or on the mobile container for removably receiving the weigh cartridge, whereby the weigh pan is connected to a weigh indicator which is calibrated to determine the amount of material transferred from or received by the container,
wherein upon receiving or transferring of material or combinations of material, the change in weight of the container is measured by the weigh pan and the actual amount of material transferred is determined by the weigh indicator on a weight differential calibration.

The system of the invention can include a blending station intermediate the supply station and the transportable material transfer unit, wherein the one or more vessels is/are separately interconnected to the blending station by a series of pump means, and wherein the controller controls the series of pump means to provide a desired material or combination of materials to the transfer unit.

In this embodiment of the invention, the blending station can be located above the level of the mobile container so that material at the blending station can be fed to the container by gravity feed. In a further embodiment, the blending station can include a series of inlet ports so that each vessel at the supply station can be provided with a dedicated pump line to a separate inlet port. In this embodiment the blending station is a common vessel, and the use of dedicated pump lines substantially avoids any possibility of cross contamination of different materials.

One or more of the vessels at the supply station can include a heating element so that a supply of a cooking fat or fats can be maintained at a temperature so as to provide the fat or fats in a liquefied form.

## Claims

1. A moveable transfer unit (1) for transfer of cooking oil and fats between a supply station and a storage tank or cooking vat including:
a wheeled support frame (2) which includes a top (3) and bottom frame ends and wherein the bottom end includes a wheeled base (5);
a mobile container (6) adapted for receiving a quantity of cooking oil and fats or mixture thereof from the supply station, the mobile container (6) having at least one receptacle mounted to said wheeled support frame (2);
a pump means (7) for transferring the cooking oil and fats from the at least one receptacle to a vat or other storage means, **characterised in that** the transfer unit (1) further includes;
a first weigh cartridge location between the base and the at least one receptacle;
a controller (12) operatively connected to the supply station;
a weigh indicator (14);
a weigh cartridge (11) including a weigh pan, the weigh pan being operably connectable to the controller (12), wherein in an operating condition the weigh cartridge (11) is removably received within the first weigh cartridge location between the base (5) and the receptacle in a first weigh condition, whereby the weigh pan is connected to said weigh indicator (14) which is calibrated to determine the amount of cooking oil and fats or mixtures supplied to the at least one receptacle by the supply station and/or amount of cooking oil and fats dispensed from the receptacle to a vat (42); and
wherein upon receiving or transferring of the cooking oil and fats, the change in weight of the mobile container (6) is measured by the weigh pan and the actual amount of cooking oil and fats transferred is determined by the weigh indicator (14) on a weight differential calibration.

2. A moveable transfer unit (1) in accordance with claim 1 wherein the at least one receptacle of the mobile container (6) can include a heating element (10), which can be used to maintain a supply of a cooking fat, otherwise solid at ambient temperature, in a liquefied state.

3. A moveable transfer unit (1) in accordance with claim 1 wherein the mobile container (6) includes a second weigh cartridge location at or adjacent to a top portion of the at least one receptacle for removably receiving the weigh cartridge (11) in a second weigh condition so that the weigh cartridge (11) can be relocated from one location to the other allowing weigh calculation of the at least one receptacle and a second receptacle stacked on top of the at least one receptacle.

4. A moveable transfer unit (1) in accordance with claim 1 wherein the controller (12) is programmed to operate the supply station such that the supply station can supply a preselected material or mixture of materials including cooking oils and/or fats.

5. A moveable transfer unit (1) in accordance with claim 1 wherein the mobile container (6) includes a second weigh cartridge location adjacent to or located on an upper portion of the mobile container for removably receiving the weigh cartridge (11) in a second weighing condition in which a second and subsequent receptacle can be mounted in a stackable array.

6. A moveable transfer unit (1) in accordance with claim 5 wherein when the weigh cartridge is removably received within the first weigh cartridge location, the receptacle is seated on or adjacent to the weigh pan.

7. A moveable transfer unit (1) in accordance with claim 5 wherein the mobile container (6) includes a plurality of receptacles mounted in a stackable array wherein the weigh cartridge (11) is relocatable from the first weigh cartridge location to a second and subsequent weigh cartridge locations between adjacent receptacles for weighing contents of each receptacle in the array.

8. A moveable transfer unit (1) in accordance with claim 5 wherein the mobile unit (1) further includes a vacuum pump (33) mounted by the mobile container, and a cooking oil and fats transfer pipe extendable between a frying vat and the receptacle for transfer of waste from the frying vat, whereby in operation the vacuum pump (33) creates a vacuum in the air space of the receptacle wherein the vacuum allows transfer of contents from the vat to the receptacle as waste via the transfer pipe.

9. A moveable transfer unit (1) in accordance with claim 5 wherein the controller is programmed to operate the supply station such that the supply station can supply a preselected material or mixture of materials including cooking oils and/or fats.

10. A moveable transfer unit (1) in accordance with claim 5 wherein the weigh cartridge (11) further includes a lifting means to assist lifting the unit (1) or the at least one receptacle.

11. A moveable transfer unit (1) in accordance with claim 10 wherein the weigh cartridge (11) includes an air operated hydraulic ram or rams (21) which operably urge positive engagement between the weigh pan and the mobile container (6) so that the container (6) and/or whole unit (1) can be weighed and weigh measurements of cooking oil and fats transferred from or received by the receptacle determined.

12. A moveable transfer unit (1) in accordance with claim 5 wherein the mobile container (6) further includes a compartment adjacent the at least one receptacle for housing a vacuum pump (33) and/or compressed air cylinder.

13. A moveable transfer unit (1) in accordance with claim 5 wherein the second weigh location includes a recess in the top frame end (3) of the mobile container (6) to removably receive the weigh cartridge in a second weigh condition such that a storage vessel or packaging container or second receptacle can be located above the first receptacle and weighed by the weigh pan.

14. A moveable transfer unit (1) in accordance with claim 5 wherein the second weigh location is provided on or adjacent a top portion of the at least one receptacle to removably receive the weigh cartridge (11) in a second weigh condition such that a storage vessel or packaging container or second receptacle can be located above the first receptacle and weighed by the weigh pan.

## Patentansprüche

1. Mobile Transporteinrichtung (1) zur Überleitung von Speiseöl und Speisefetten zwischen einer Abgabestation und einem Vorratsbehälter oder einem Kochkessel, umfassend:
- ein mit Rädern versehenes Gestell (2), das eine obere Gestellfläche (3) und eine untere Gestellfläche aufweist und bei dem die untere Gestellfläche eine mit Rädern versehene Basis (5) umfasst;
- einen mobilen Behälter (6), der für den Empfang einer Menge von Speiseöl und Speisefetten oder einer Mischung daraus von der Abgabestation ausgelegt ist, wobei der mobile Behälter (6) mindestens ein an dem mit Rädern versehenen Gestell (2) angebrachtes Aufnahmegefäß aufweist;
- eine Pumpeinrichtung (7) für die Überleitung von Speiseöl und Speisefetten von dem mindestens einen Aufnahmegefäß zu einem Kessel oder anderen Vorratseinrichtungen,
**gekennzeichnet dadurch, dass** die Transporteinrichtung (1) ferner umfasst:
- eine erste Wägemodulposition zwischen der Basis und dem mindestens einen Aufnahmegefäß;
- eine mit der Abgabestation betriebsfähig verbundene Steuereinrichtung (12);
- ein Gewichtsanzeigegerät (14);
- ein Wägemodul (11) mit einer Wägeschale, die mit der Steuereinrichtung (12) betriebsfähig verbindbar ist, wobei in einem Betriebszustand das Wägemodul (11) an der ersten Wägemodulposition zwischen der Basis (5) und dem Aufnahmegefäß in einem ersten Wägezustand entfernbar aufgenommen ist, wobei die Wägeschale mit dem Gewichtsanzeigegerät (14) verbunden ist, das für die Bestimmung der von der Abgabestation an das mindestens eine Aufnahmegefäß abgegebenen Menge von Speiseöl und Speisefetten oder der Mischungen und/oder der von dem Aufnahmegefäß an einen Kessel (42) abgegebenen Menge von Speiseöl und Speisefetten kalibriert ist; und
- wobei bei der Aufnahme oder Überleitung des Speiseöls und der Speisefette die Gewichtsveränderung des mobilen Behälters (6) durch die Wägeschale gemessen und die tatsächliche Menge von Speiseöl und Speisefetten durch das Gewichtsanzeigegerät (14) aufgrund einer Differenzgewichtskalibrierung bestimmt wird.

2. Mobile Transporteinrichtung (1) nach Anspruch 1, wobei das mindestens eine Aufnahmegefäß des mobilen Behälters (6) ein Heizelement (10) umfassen kann, das zur Aufrechterhaltung einer Abgabe eines Speisefetts, das ansonsten bei Umgebungstemperatur fest wäre, in verflüssigtem Zustand eingesetzt werden kann.

3. Mobile Transporteinrichtung (1) nach Anspruch 1, wobei der mobile Behälter (6) eine zweite Wägemodulposition an einem oder in der Nähe eines oberen Abschnitts des mindestens einen Aufnahmegefäßes aufweist, um das Wägemodul (11) in einem zweiten Wägezustand entfernbar aufzunehmen, so dass das Wägemodul (11) von der einen in die andere Position umgesetzt werden kann, was die Berechnung des Gewichts des mindestens einen Aufnahmegefäßes und eines auf der Oberseite des mindestens einen Aufnahmegefäßes angeordneten zweiten Aufnahmegefäßes ermöglicht.

4. Mobile Transporteinrichtung (1) nach Anspruch 1, wobei die Steuereinrichtung (12) für den Betrieb der Abgabestation derart programmiert ist, dass die Abgabestation ein vorgewähltes Material oder eine vorgewählte Mischung von Materialien umfassend Speiseöle und/oder Speisefette abgeben kann.

5. Mobile Transporteinrichtung (1) nach Anspruch 1, wobei der mobile Behälter (6) eine zweite Wägemodulposition in der Nähe eines oder auf einem oberen Abschnitt des mobilen Behälters (6) aufweist, um das Wägemodul (11) in einem zweiten Wägezustand entfernbar aufzunehmen, in dem ein zweites und nachfolgendes Aufnahmegefäß in einer stapelbaren Gruppe angebracht werden kann.

6. Mobile Transporteinrichtung (1) nach Anspruch 5, wobei sich das Aufnahmegefäß auf oder in der Nähe der Wägeschale befindet, wenn das Wägemodul (11) an der ersten Wägemodulposition entfernbar aufgenommen ist.

7. Mobile Transporteinrichtung (1) nach Anspruch 5, wobei der mobile Behälter (6) eine Vielzahl von in einer stapelbaren Gruppe angeordneten Aufnahmegefäßen umfasst, wobei das Wägemodul (11) zum Abwiegen der Inhalte eines jeden Aufnahmegefäßes der Gruppe von der ersten Wägemodulposition in eine zweite und nachfolgende Wägemodulposition zwischen benachbarten Aufnahmegefäßen umsetzbar ist.

8. Mobile Transporteinrichtung (1) nach Anspruch 5, wobei das mobile System (1) ferner eine am mobilen Behälter angebrachte Vakuumpumpe (33) sowie eine Speiseöl- und Speisefettüberführungsleitung umfasst, die zwischen einem Kochkessel und dem Aufnahmegefäß für die Überleitung von Abfallmaterial aus dem Kochkessel verlegbar ist, wobei bei Betrieb die Vakuumpumpe (33) ein Vakuum im Luftraum des Aufnahmegefäßes erzeugt, wobei das Vakuum die Überführung von Inhalten als Abfallmaterial aus dem Kessel in das Aufnahmegefäß über die Überführungsleitung ermöglicht.

9. Mobile Transporteinrichtung (1) nach Anspruch 5, wobei die Steuereinrichtung (12) für den Betrieb der Abgabestation derart programmiert ist, dass die Abgabestation ein vorgewähltes Material oder eine vorgewählte Mischung von Materialien umfassend Speiseöle und/oder Speisefette abgeben kann.

10. Mobile Transporteinrichtung (1) nach Anspruch 5, wobei das Wägemodul (11) ferner eine Hubeinrichtung umfasst, die das Anheben des Systems (1) oder des mindestens einen Aufnahmegefäßes unterstützt.

11. Mobile Transporteinrichtung (1) nach Anspruch 10, wobei das Wägemodul (11) einen oder mehrere druckluftbetriebene Hubzylinder (21) umfasst, die ein formschlüssiges Ineinandergreifen zwischen der Wägeschale und dem mobilen Behälter (6) betriebsfähig derart herbeiführen, dass der Behälter (6) und/oder die gesamte Einrichtung (1) gewogen werden kann und Gewichtsmesswerte von Speiseöl und Fetten, die von dem Aufnahmegefäß übergeleitet oder empfangen werden, bestimmt werden können.

12. Mobile Transporteinrichtung (1) nach Anspruch 5, wobei der mobile Behälter (6) ferner ein Abteil neben dem mindestens einen Aufnahmegefäß zur Aufnahme einer Vakuumpumpe (33) und/oder eines Druckluftzylinders umfasst.

13. Mobile Transporteinrichtung (1) nach Anspruch 5, wobei die zweite Wägeposition eine Ausnehmung in der oberen Gestellfläche (3) des mobilen Behälters (6) umfasst, um das Wägemodul in einem zweiten Wägezustand derart entfernbar aufzunehmen, dass ein Vorratsgefäß oder ein Verpackungsbehälter oder ein zweites Aufnahmegefäß über dem ersten Aufnahmegefäß angeordnet und von der Wägeschale gewogen werden kann.

14. Mobile Transporteinrichtung (1) nach Anspruch 5, wobei die zweite Wägeposition auf oder neben einem oberen Abschnitt des mindestens einen Aufnahmegefäßes vorgesehen ist, um das Wägemodul (11) in einer zweiten Wägeposition derart entfernbar aufzunehmen, dass ein Vorratsgefäß oder ein Verpackungsbehälter oder ein zweites Aufnahmegefäß über dem ersten Aufnahmegefäß angeordnet und von der Wägeschale gewogen werden kann.

## Revendications

1. Unité de transfert mobile (1) destinée à transférer une huile et des matières grasses de cuisson entre une station d'alimentation et un réservoir de stockage ou un bac de cuisson incluant :
un cadre de support sur roues (2) qui inclut des extrémités de cadre supérieure (3) et inférieure et où l'extrémité inférieure inclut une base sur roues (5) ;
un conteneur mobile (6) conçu pour recevoir une quantité d'huile et de matières grasses de cuisson ou un mélange de celles-ci depuis la station d'alimentation, le conteneur mobile (6) comportant au moins un réceptacle monté sur ledit cadre de support sur roues (2) ;
un moyen de pompage (7) destiné à transférer l'huile et les matières grasses de cuisson depuis le au moins un réceptacle vers un bac ou un autre moyen de stockage, **caractérisée en ce que** l'unité de transfert (1) inclut en outre ;
une première position pour cuve de pesée entre la base et le au moins un réceptacle
un dispositif de contrôle (12) connecté de manière fonctionnelle à la station d' alimentation ;
un indicateur de pesée (14) ;
une cuve de pesée (11) incluant un panneau de pesée, le panneau de pesée pouvant être connecté de manière fonctionnelle au dispositif de contrôle (12), où dans une condition de fonctionnement, la cuve de pesée (11) est reçue de manière amovible au sein de la première position pour cuve de pesée entre la base (5) et le réceptacle dans une première condition de pesée, grâce à quoi le panneau de pesée est connecté audit indicateur de pesée (14) qui est étalonné pour déterminer la quantité d'huile et de matières grasses de cuisson ou de mélanges fournis à au moins un réceptacle par la station d'alimentation et/ou la quantité d'huile et de matières grasses de cuisson délivrée depuis le réceptacle vers un bac (42) ; et
où au moment de la réception ou du transfert de l'huile et des matières grasses de cuisson, la modification du poids du conteneur mobile (6) est mesurée par le panneau de pesée et la quantité réelle d'huile et de matières grasses de cuisson transférée est déterminée par l'indicateur de pesée (14) sur un étalonnage différentiel de pesée.

2. Unité de transfert mobile (1) selon la revendication 1, dans laquelle le au moins un réceptacle du conteneur mobile (6) peut inclure un élément de chauffage (10), qui peut être utilisé pour maintenir une alimentation de matière grasse de cuisson, qui sinon est solide à température ambiante, dans un état liquéfié.

3. Unité de transfert mobile (1) selon la revendication 1, dans laquelle le conteneur mobile (6) inclut une deuxième position pour cuve de pesée au niveau d'une partie supérieure du au moins un réceptacle ou adjacente à celle-ci en vue de recevoir de façon amovible la cuve de pesée (11) dans une deuxième condition de pesée de sorte que la cuve de pesée (11) peut être repositionnée depuis une première position vers l'autre en permettant un calcul de pesée du au moins un réceptacle et d'un deuxième réceptacle empilé sur le sommet du au moins un réceptacle.

4. Unité de transfert mobile (1) selon la revendication 1, dans lequel le dispositif de contrôle (12) est programmé pour activer la station d'alimentation de telle sorte que la station d'alimentation peut fournir un matériau présélectionné ou un mélange de matériaux présélectionnés incluant des huiles et/ou des matières grasses de cuisson.

5. Unité de transfert mobile (1) selon la revendication 1, dans laquelle le conteneur mobile (6) inclut une deuxième position pour cuve de pesée adjacente à une partie supérieure du conteneur mobile ou positionnée sur celle-ci en vue de recevoir de façon amovible la cuve de pesée (11) dans une deuxième condition de pesée où un deuxième réceptacle et d'autres peuvent être montés selon un réseau pouvant être empilé.

6. Unité de transfert mobile (1) selon la revendication 5, dans laquelle lorsque la cuve de pesée est reçue de manière amovible au sein de la première position pour cuve de pesée, le réceptacle est logé sur le panneau de pesée ou adjacent à celui-ci.

7. Unité de transfert mobile (1) selon la revendication 5, dans laquelle le conteneur mobile (6) inclut une pluralité de réceptacles montés selon un réseau pouvant être empilé où la cuve de pesée (11) est repositionnable depuis la première position pour cuve de pesée vers une deuxième position pour cuve de pesée et d'autres entre des réceptacles adjacents en vue de peser des contenus de chaque réceptacle dans le réseau.

8. Unité de transfert mobile (1) selon la revendication 5, où l'unité mobile (1) inclut en outre une pompe à vide (33) montée sur le conteneur mobile, et une canalisation de transfert d'huile et de matières grasses de cuisson pouvant s'étendre entre un bac de friture et le réceptacle en vue d'un transfert de déchet depuis le bac de friture, grâce à quoi en fonctionnement, la pompe à vide (33) crée un vide dans l'espace d'air du réceptacle où le vide permet un transfert de contenus depuis le bac vers le réceptacle en tant que déchet par l'intermédiaire de la canalisation de transfert.

9. Unité de transfert mobile (1) selon la revendication 5, dans laquelle le dispositif de contrôle est programmé pour activer la station d'alimentation de telle sorte que la station d'alimentation peut fournir un matériau présélectionné ou un mélange de matériaux présélectionnés incluant des huiles et/ou des matières grasses de cuisson.

10. Unité de transfert mobile (1) selon la revendication 5, dans laquelle la cuve de pesée (11) inclut en outre un moyen de levée pour faciliter la levée de l'unité (1) ou du au moins un réceptacle.

11. Unité de transfert mobile (1) selon la revendication 10, dans laquelle la cuve de pesée 11 inclut un vérin ou des vérins hydrauliques actionnés par de l'air (21) qui sollicitent de manière fonctionnelle un engagement positif entre le panneau de pesée et le conteneur mobile (6) de sorte que le conteneur (6) et/ou l'unité entière (1) peuvent être pesés et que des mesures de pesée d'huile et de matières grasses de cuisson peuvent être transférées depuis le réceptacle déterminé ou reçues par le réceptacle déterminé.

12. Unité de transfert mobile (1) selon la revendication 5, dans laquelle le conteneur mobile (6) inclut en outre un compartiment adjacent à au moins un réceptacle en vue de loger une pompe à vide (33) et/ou une bouteille d'air comprimé.

13. Unité de transfert mobile (1) selon la revendication 5, dans laquelle la deuxième position de pesée inclut un évidemment dans l'extrémité de cadre supérieure (3) du conteneur mobile (6) pour recevoir de manière amovible la cuve de pesée dans une deuxième condition de pesée de telle sorte qu'un récipient de stockage ou conteneur de conditionnement ou un deuxième réceptacle peuvent être localisés au-dessus du premier réceptacle et pesés par le panneau de pesée.

14. Unité de transfert mobile (1) selon la revendication 5, dans laquelle la deuxième position de pesée est prévue sur une partie supérieure du au moins un réceptacle ou adjacente à celui-ci pour recevoir de façon amovible la cuve de pesée (11) dans une deuxième condition de pesée de telle sorte qu'un récipient de stockage ou un conteneur de conditionnement ou un deuxième réceptacle peuvent être localisés au-dessus du premier réceptacle et pesés par le panneau de pesée.
